# EUROPEAN PATENT APPLICATION

(11) **EP 1 657 684 A2**
(43) Date of publication of application: **17.05.2006**
(21) Application number: 05005138.2
(22) Date of filing: 09.03.2005
(51) Int. Cl.: G07C 9/00

(54) **Process synchronous proving system and process synchronous proving method**

(30) Priority: 12.11.2004 JP 2004329408
(71) Applicant: FUJITSU LIMITED, Kawasaki-shi, Kanagawa 211-8588 (JP)
(72) Inventor: Matsumoto, Yuji Fujitsu Network Technologies Ltd., Yokohama-shi Kanagawa 222-0033 (JP)
(74) Representative: HOFFMANN EITLE

(57) **Abstract**

A disclosed process synchronous proving system includes: a holding part configured to hold a determination condition for a factor based on an action, which factor is difficult to obtain by anyone except for a valid user; a detection part configured to detect the factor; a determination part configured to determine whether the determination condition is satisfied by the factor that is detected; and a providing part configured to provide proving information according to a result of determination by the determination part.

## Description

### BACKGROUND OF THE INVENTION

### 1. Field of the Invention

The present invention relates to a process synchronous proving system and a process synchronous proving method for proving that a particular apparatus is under the control of a valid user by using "a factor based on actions" that is difficult to attain by anyone except the valid user.

### 2. Description of the Related Art

Transactions using a credit card, money transferring using a cash card and the like are widely performed. As a method for authenticating personal identification for using the cards, a signature, a password, and the like are generally used. In addition, recently, use of biometrics such as fingerprint identification has been increasing when the cash card and the like are used.

However, as to the signature, spoofing is easily performed by faking the signature. Also, the password may be easily analyzed, and a copy card may be made. Therefore, the above-mentioned methods are not necessarily safe. Further, as to the biometrics, the biological information describes characteristics that do not change. Therefore, once the information is disclosed, there is a risk that irreversible damage may occur since the information cannot be changed.

These problems are not limited to the credit card and the like, but may be applied to anything that should not be used without authority. For example, in recent years, it has become general practice to carry a communication device such as a mobile phone, but, if the communication device is lost, there is a risk that information in the device may be disclosed. Thus, it is required to ensure the identity of a user.

A technology to solve the above-mentioned problems is disclosed in WO01/088790 (to be referred to as document 1) and Japanese Laid-Open Patent Application No. 2002-7931 (to be referred to as document 2), for example. In the technology, the credit card can be used on condition that the user has both a mobile terminal whose position is detectable and the credit card, and use of the credit card by the user is accepted only when the position of a store where the user uses the credit card and a detected position of the mobile terminal are the same under processing by a center.

In addition, in a technology for authenticating a terminal connected to a system disclosed in Japanese Laid-Open Patent Application No. 2001-209614 (to be referred to as document 3), times are synchronized between a connecting apparatus and a terminal, in which a password is changed according to a predetermined algorithm with the passage of time, and a password sent from the terminal to the connecting apparatus is compared with a password of the terminal held in the connecting apparatus so that authentication is performed according to agreement or disagreement, and communication is permitted when they agree.

However, in the technology disclosed in the documents 1 and 2, there is a problem in that anyone who has a credit card and a mobile terminal may be regarded as a valid owner. That is, if the credit card and the mobile terminal are stolen at the same time, they may be invalidly used by a person who knows that the credit card can be used with the mobile terminal. Thus, personal identification cannot be ensured since it cannot be said that only a valid user has the credit card and the mobile terminal.

In addition, according to the technology, since the location of a person who has the credit card is monitored via a network, there is a problem of privacy. Further, there is a problem in that an infrastructural network including the center apparatus is necessary for realizing position detection and authentication so that large scale development is necessary, and the method of authentication is fixed and has no flexibility.

In the technology in the document 3, a password that changes with the passage of time is used for determining whether an apparatus is valid for communication. Thus, this technology is effective for theft of a password, but it is not effective for theft of the terminal itself.

As mentioned above, conventionally, there are no means for ensuring credibility for proving that a particular apparatus is validly under control of a user himself. The conventional technology simply identifies an object by using an object, so that the risk of theft and the like cannot be reduced generally.

### SUMMARY OF THE INVENTION

An object of the present invention is to provide a process synchronous proving system and a process synchronous proving method for ensuring sophisticated security by setting a factor based on action at a personal level without using a specific external infrastructure for proving.

The above-mentioned object is achieved by a process synchronous proving system including:
a holding part configured to hold a determination condition for a factor based on an action which factor is difficult to attain by anyone except for a valid user;
a detection part configured to detect the factor;
a determination part configured to determine whether the determination condition is satisfied by the factor that is detected; and
a providing part configured to provide proving information according to a result of determination by the determination part.

According to the present invention, since whether proving information can be provided is determined by using a factor based on action which factor is difficult to attain by anyone except for a valid user, sophisticated security can be ensured, by freely setting a factor based on action at a personal level, without using a specific external infrastructure for proving.

### BRIEF DESCRIPTION OF THE DRAWINGS

Fig.1 shows a configuration example of a process synchronous proving system according to an embodiment of the present invention;
Fig.2 shows a configuration example in a case where a proving process apparatus 1 and a proof using apparatus 2 are integrated to form the proving process apparatus 1;
Fig.3 shows a configuration example in a case where the proving process apparatus 1 and the proof using apparatus 2 are separated;
Fig.4 shows an example of a determination process data table 141;
Fig.5 shows another example of the determination process data table 141;
Fig.6 shows an example of a factor information table 131;
Fig.7 is a flowchart showing processes for setting proving information;
Fig.8 is a flowchart showing a process determination process;
Fig.9 is a flowchart showing processes for providing proving information and the like;
Fig.10 is a flowchart showing processes for a factor event;
Fig.11 shows a concrete example in a case where the proving process apparatus 1 and the proof using apparatus 2 are integrated;
Fig.12 shows a concrete example in a case where the proving process apparatus 1 and the proof using apparatus 2 are separated;
Fig.13 shows a concrete example of a determination condition (1);
Fig.14 shows a concrete example of a determination condition (2);
Fig.15 shows a concrete example of a determination condition (3);
Fig.16 shows a concrete example of a determination condition (4);
Fig.17 shows a concrete example of a determination condition (5);
Fig.18 shows a concrete example of a determination condition (6);
Fig.19 shows a concrete example of a determination condition (7).

### DETAILED DESCRIPTION OF THE PREFERRED EMBODIMENTS

In the following, embodiments of the present invention are described with reference to figures.

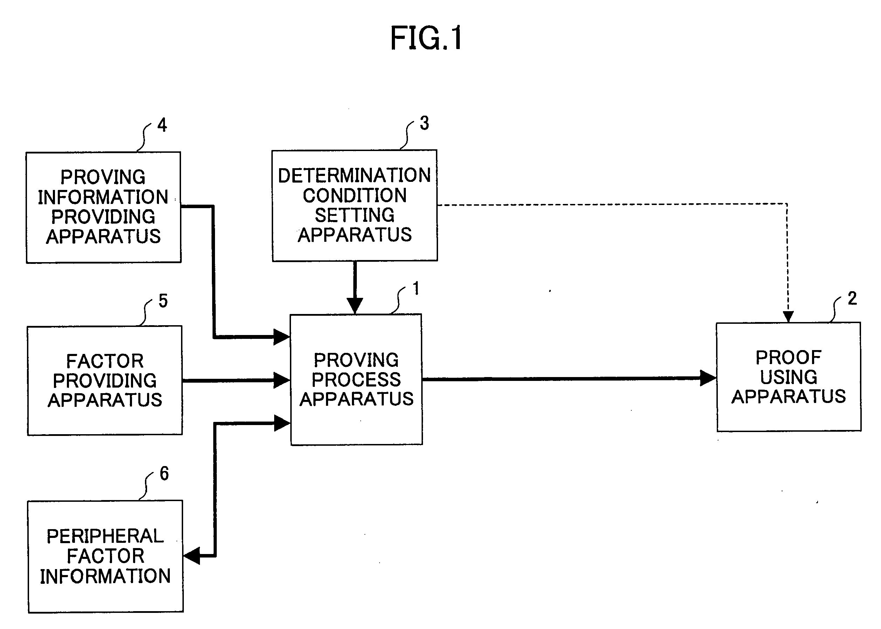

Fig.1 shows a configuration example of the process synchronous proving system according to an embodiment of the present invention. In Fig.1, the process synchronous proving system includes a proving process apparatus 1, a proof using apparatus 2, a determination condition setting apparatus 3, a proving information providing apparatus 4 and a factor providing apparatus 5. The proving process apparatus 1 stores a determination condition of a factor based on an action that is difficult for anyone except a valid user to attain, and performs determination and provides proving information when the factor is detected. The proof using apparatus 2 receives the proving information from the proving process apparatus 1 to use it for controlling functions of the proof using apparatus 2. The determination condition setting apparatus 3 sets a determination condition for the proving process apparatus 1 and sets a correspondence to the proving process apparatus 1 for the proof using apparatus 2 as necessary. The proving information providing apparatus 4 provides the proving process apparatus 1 with proving information based on which the proving process apparatus issues the proving information. The factor providing apparatus 5 provides the proving process apparatus 1 with a factor on which determination is performed. The peripheral factor information 6 is peripheral factor information other than the factor information provided by the factor providing apparatus 5. Each of the apparatuses 1-5 is classified from a functional viewpoint, thus, a plurality of apparatuses may be configured as one body or as plural bodies according to applications.

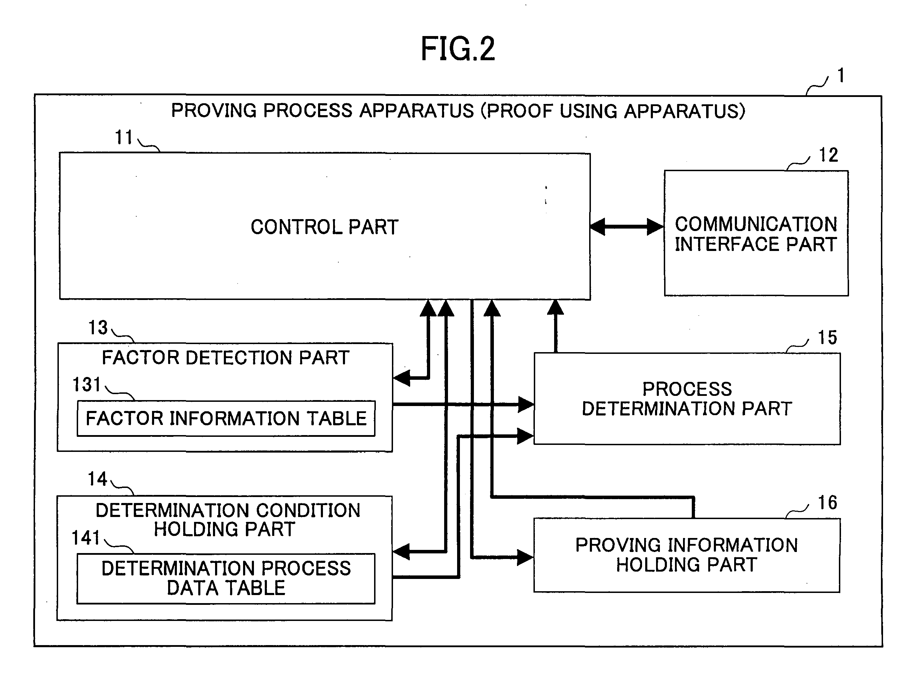

Fig.2 shows a configuration example in a case where the proving process apparatus 1 and the proof using apparatus 2 are integrated to form the proving process apparatus 1, in which the proving process apparatus 1 itself uses the proving information according to a result of determination. The determination condition setting apparatus 3, the proving information providing apparatus 4 or the factor providing apparatus 5 may be integrated with the proving process apparatus 1 and the proof using apparatus 2.

As shown in Fig.2, the proving process apparatus 1 includes a control part 11, a communication interface part 12 for communicating with an external apparatus, a factor detection part 13, a determination condition holding part 14, a process determination part 15, and a proving information holding part 16. The control part 11 controls all functions of the apparatus including functions for processing a factor event based on which a factor is detected and for providing proving information, and functions essential for the proving process apparatus 1 (for example, a communication function, and viewing/setting function for internal information and the like if the proving process apparatus 1 is a mobile terminal) according to proving information. The factor detection part 13 detects a factor that should be dealt with from factors sent from the control part 11 by applying a factor information table 131. The determination condition holding part 14 holds, as a determination process data table 141, determination conditions of factors based on actions that are difficult for anyone except a valid user to attain. The process determination part 15 determines whether a determination condition of the determination condition holding part 14 is satisfied as to a factor detected in the factor detection part 13. The proving information holding part 16 holds proving information that is set fixedly or dynamically from the control part 11.

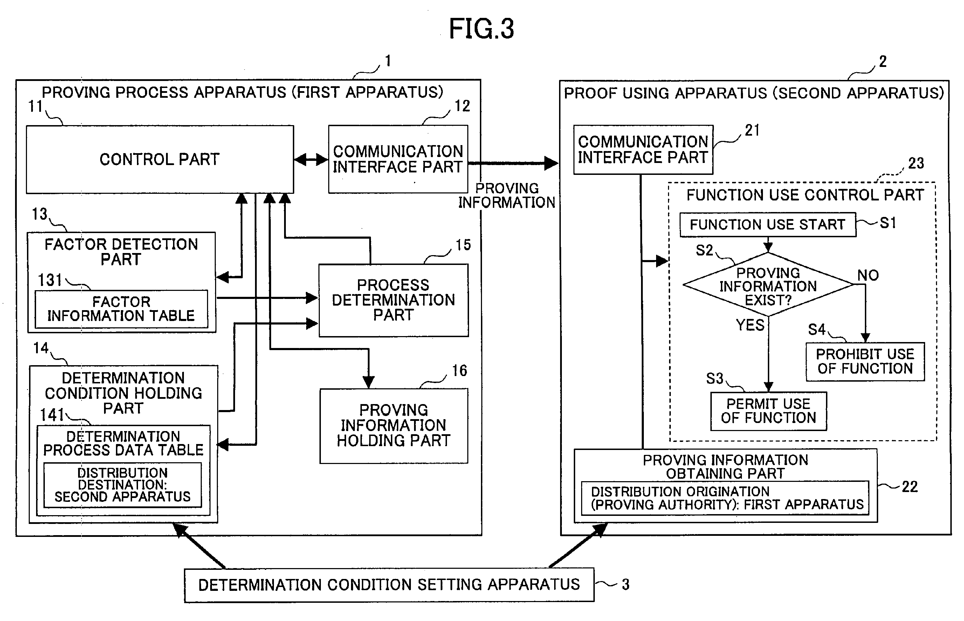

Fig.3 shows a configuration example in a case in which the proving process apparatus 1 and the proof using apparatus 2 are separated. In this case, according to a result of determination, the proving process apparatus 1 becomes a proving authority for the proof using apparatus 2, and the proof using apparatus 2 uses the proving information. Although the determination condition setting apparatus 3 is shown as separated, it may be integrated with the proving process apparatus 1, the proving information providing apparatus 4, and the factor providing apparatus 5.

In Fig.3, an internal configuration of the proving process apparatus 1 is the same as one shown in Fig.2. The proof using apparatus 2 includes a communication interface part 21 for communicating with the communication interface part 12 of the proving process apparatus 1, a proving information obtaining part 22 for obtaining proving information from the proving process apparatus 1 via the communication interface part 21, and a function use control part 23 for controlling essential functions of the proof using apparatus 2 according to an obtaining status of the proving information.

For setting the determination condition, the determination condition setting apparatus 3 writes information for identifying the proof using apparatus 2 as a distribution destination into the determination process data table 141 of the determination condition holding part 14 of the proving process apparatus 1, and, at the same time, the determination condition setting apparatus 3 writes, into the proving information obtaining part 22 of the proof using apparatus 2, information for identifying the proving process apparatus 1 as a trusted authentication system that is a distribution source of the proving information. As the determination condition, there are various examples as mentioned below. When the determination condition is satisfied so that the proving process apparatus 1 provides the proof using apparatus 2 with the proving information, the function use control part 23 of the proof using apparatus 2 determines the existence of the proving information when it starts to use a function (steps S1 and S2). If the proving information exists, the function use control part 23 allows the apparatus to use the function (step S3). If the proving information does not exist, the function use control part 23 does not allow the apparatus to use the function (step S4).

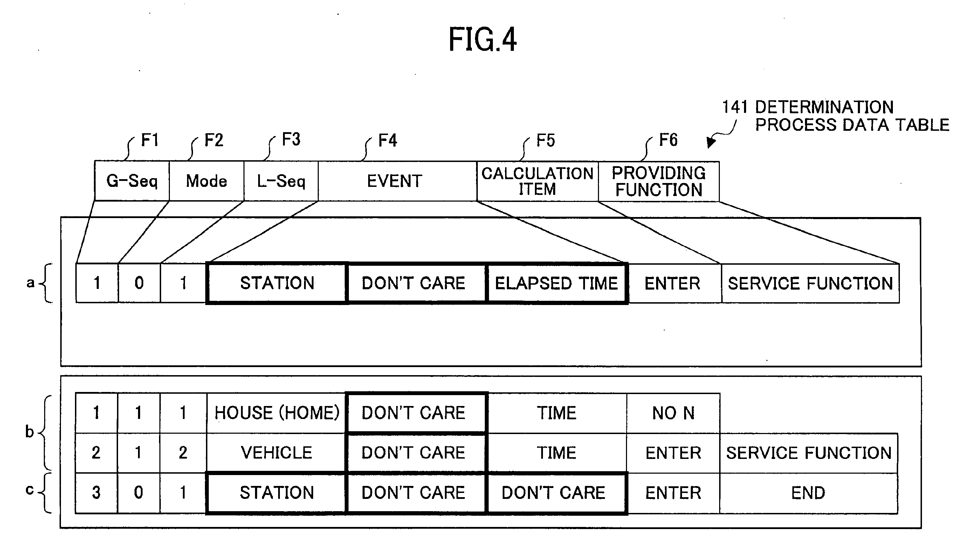

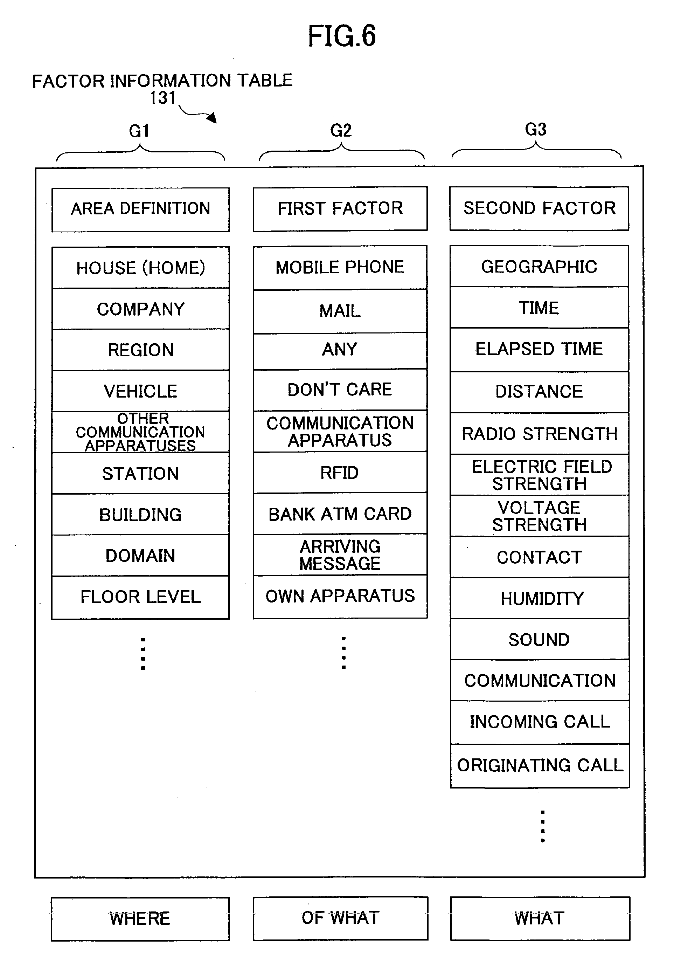

Fig.4 shows an example of the determination process data table 141 in the determination condition holding part 14. The determination process data table 141 includes fields F1 - F6. The field F1 indicates a table order (G-Seq). The field F2 indicates modes (Mode) that are "single mode" (numeral representation : 0) for performing determination by using one line, "sequential mode" (numeral representation : 1) for performing determination by using a plurality of lines sequentially, and "simultaneous mode" (numeral representation : 2) for performing determination by using a plurality of lines at the same time. The field F3 indicates an order of a line (L-Seq). The field F4 indicates an event for identifying a factor. The field F5 indicates a logical calculation with another line (NON : no calculation, AND : logical multiplication, OR : logical addition, NOT : logical negation, JUMP : moving to a specified line in the sequential mode) and indicates that a line is a last line of the conditions (Enter). The field F6 indicates a providing function when a condition is satisfied (the providing function is distributing proving information, instructing to write proving information, table clear, prohibiting distribution of proving information, service functions, prohibiting to prove for a predetermined term, allowing to prove for a predetermined term, allowing to prove predetermined times, ending a function, or the like). As to the field F4 indicating an event, although the information is shown by characters in the figure for the sake of understanding, the filed F4 stores reference information to an item of a below-mentioned factor information table 131 (Fig.6).

A line "a" indicates the single mode, and describes an action for which a predetermined time has passed in a station as an event, and the line indicates that a predetermined service function will be provided if the condition is satisfied. Plural lines "b" indicate the sequential mode, and describe an action for which a predetermined time has elapsed in a home, and, next, a predetermined time has elapsed in a vehicle as an event, and the lines indicate that a predetermined service function will be provided if the sequential conditions are satisfied. A line "c" indicates the single mode, and describes an action for which a user is in a station as an event, and the line indicates that a function ends if the condition is satisfied.

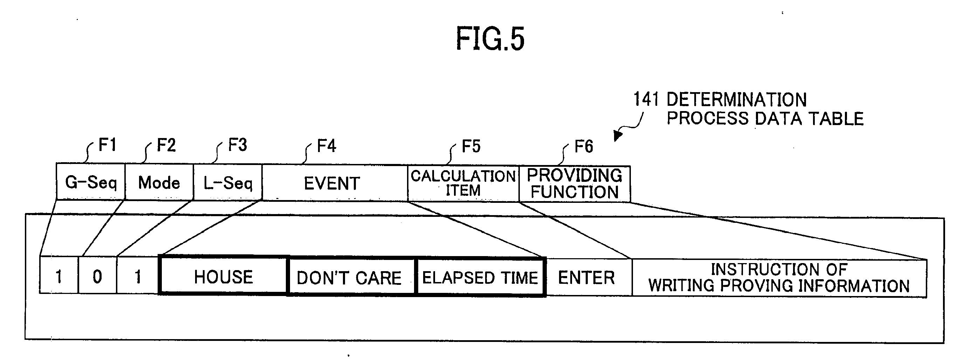

Fig.5 shows another example of the determination process data table 141, which indicates the single mode in which an action for which a predetermined time has passed in a home is described as an event, and the table indicates that proving information will be written if the condition is satisfied.

Fig.6 shows an example of the factor information table 131 in the factor detection part 13. The factor information table 131 includes groups G1 - G3. The group G1 indicates a group of "area definition" in which a location where a factor corresponding to "where" occurs is defined. The group G2 indicates a group of "first factor" in which factor information corresponding to "of what" is defined. The group G3 indicates a group of "second factor" in which factor information corresponding to "what" is defined. These are merely examples. Thus, the factor may be further classified or may be classified from another viewpoint.

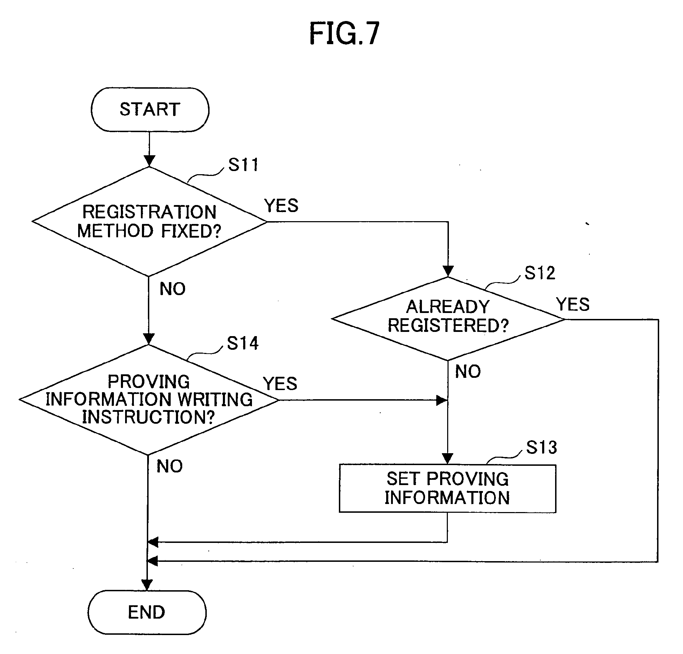

Fig.7 is a flowchart showing processes for setting (registering) proving information provided from the proving information providing apparatus 4 (Fig.1) in the proving information holding part 16 (Fig.2, Fig.3) under control of the control part 11 (Fig.2, Fig.3) in the proving process apparatus 1. In Fig.7, when the process starts, the apparatus 1 determines whether a registration method of the proving information is "fixed" in step S11. If it is "fixed", the apparatus 1 determines whether proving information has already been registered in step S12. If the information has already been registered, the process ends. If the information has not already been registered, the proving information is set in step S13 and the process ends. If the registration method is not "fixed" (if the registration is dynamically performed), the apparatus 1 determines whether there is an instruction for writing proving information from the process determination part 15 in step S14. If there is no instruction, the process ends. If there is an instruction, the proving information is set in step S13, and the process ends. In the above-mentioned process, whether the registration method is "fixed" is set according to a type of proving information beforehand.

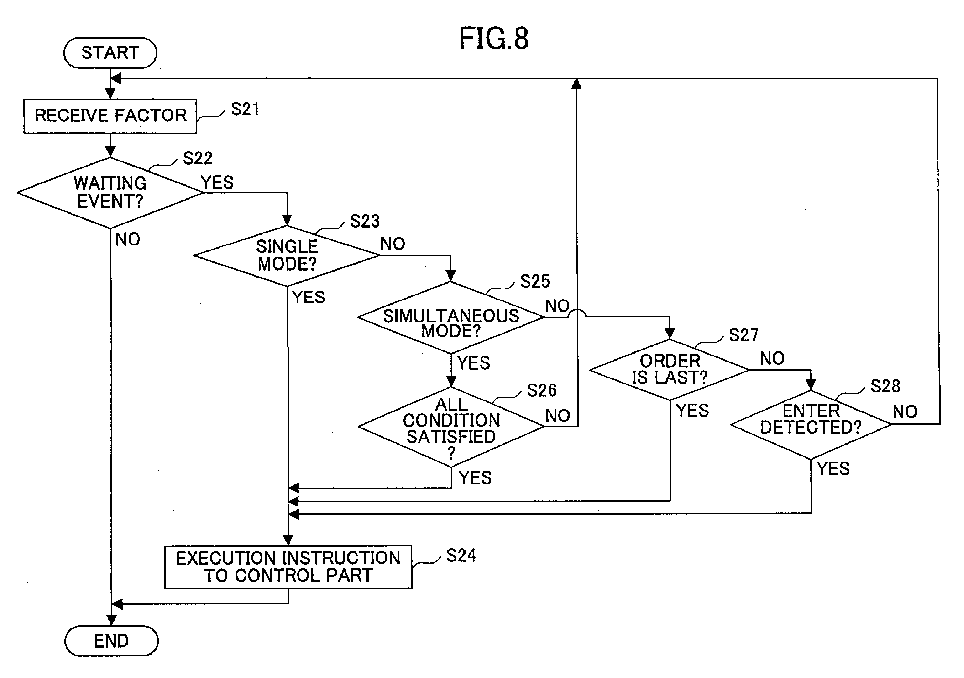

Fig.8 is a flowchart showing a process determination process in the process determination part 15 (Fig.2, Fig.3) in the proving process apparatus 1. As shown in Fig.8, when the process determination part 15 receives a factor from the factor detection part 13 (Fig.2, Fig.3) in step S21, the process determination part 15 determines whether the factor is a waiting event by referring to the determination process data table 141 in step S22. If it is not a waiting event, the process ends. If it is a waiting event, the process determination part 15 determines whether a mode of a corresponding line in the determination process data table 141 is the single mode in step S23. If the mode is the single mode, the process determination part 15 instructs the control part 11 to execute a providing function in step S24, and the process ends.

If the mode is not the single mode, the process determination part 15 determines whether the mode is the simultaneous mode in step S25. If the mode is the simultaneous mode, the process determination part 15 determines whether all corresponding conditions are satisfied in step S26. If they are satisfied, the process determination part 15 instructs the control part 11 to executes a providing function in step S24 and the process ends. If the mode is not the simultaneous mode, the mode is determined to be the sequential mode, and the process determination part 15 determines whether the order is last in step S27. If the order is last, the process determination part 15 instructs the control part 11 to executes a providing function in step S24 and the process ends. If the order is not last, the process determination part 15 determines whether Enter is detected as a calculation item in step S28. If it is detected, the process returns to the waiting status for receiving a factor (step S21). If it is detected, the process determination part 15 instructs the control part 11 to execute a providing function in step S24 and the process ends.

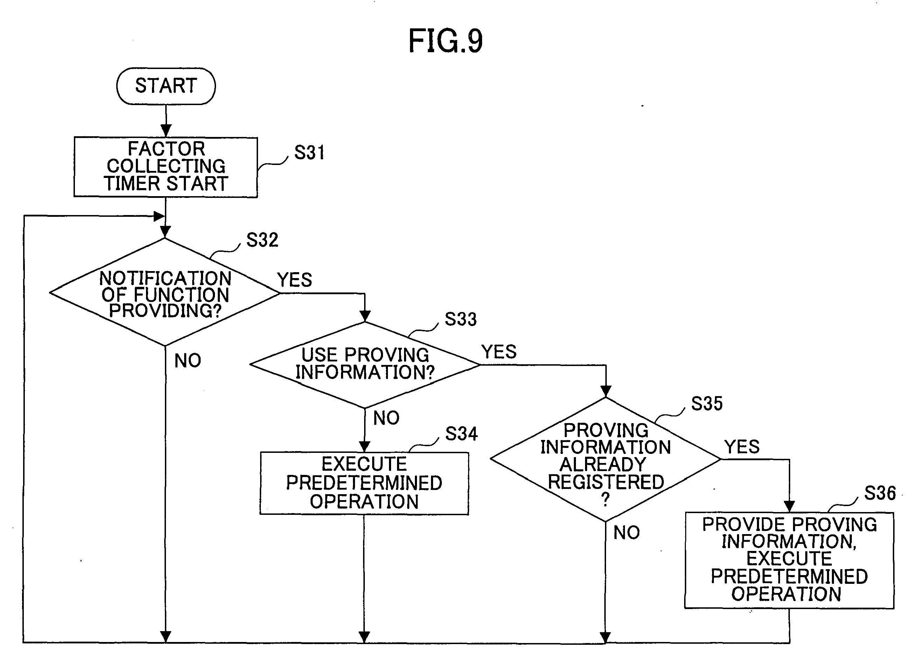

Fig.9 is a flowchart showing a process for providing proving information and the like in the control part 11 (Fig.2, Fig.3) of the proving process apparatus 1. In Fig.9, when the operation starts, the control part 11 starts a factor collecting timer in step S31. Then, the control part 11 determines whether the process determination part 15 notifies the control part 11 of providing a function in step S32. This step is repeated until there is the notification. When there is the notification, the control part 11 determines whether the function uses the proving information in step S33. If the function is not one that uses the proving information, a predetermined operation is executed in step S34. Operations of functions that do not use the proving information are: termination of a function (termination of an essential function of the proof using apparatus 2), termination of a proving authority function (termination of providing a function to the separate proof using apparatus 2 as the proving authority), setting of proving information (newly setting proving information that is not set or invalid currently), deletion of proving information, setting of a communication device (setting of a communication device that is a distribution destination of the proving information), deletion of a communication apparatus, change of a start position of a determination process data table, registration of a determination process data table, release (deletion) of a determination process data table, and the like.

On the other hand, if the function is one that uses proving information, the control part 11 determines whether the proving information is already registered in step S35. If it is not already registered, the process returns to notification of function providing (step S32). If it is already registered, the control part 11 executes a predetermined operation for providing proving information and the like in step S36. Operations for providing functions that use the proving information are : start of a function (start of an essential function of the proof using apparatus 2), start of a proving authority function (start of providing a function to the separated proof using apparatus 2 as a proving authority), registration to the determination process data table, release (deletion) of the determination process data table, and the like.

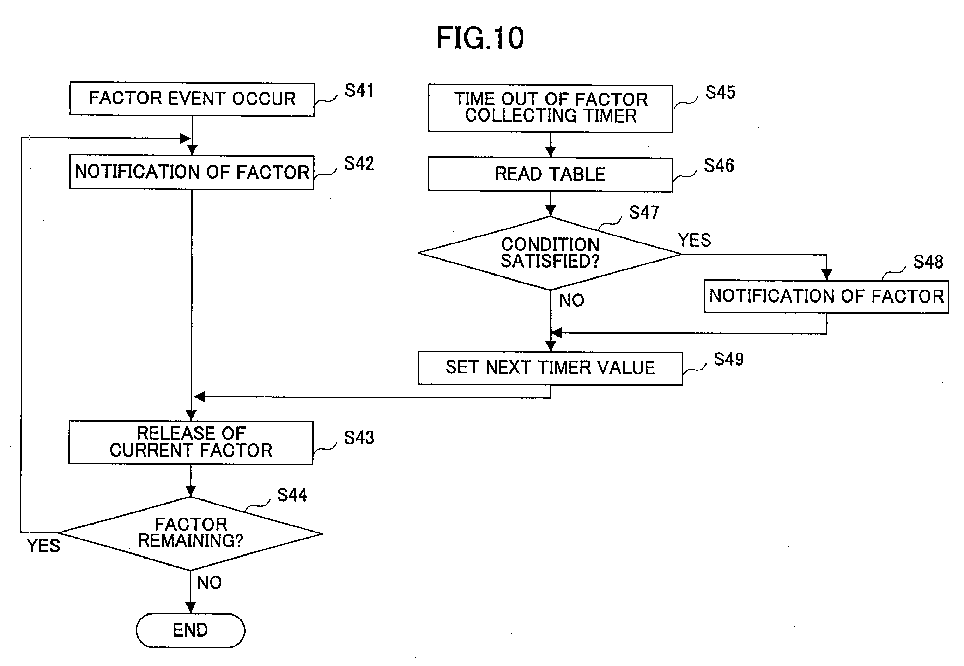

Fig.10 is a flowchart showing a process for a factor event in the control part 11 (Fig.2, Fig.3) in the proving process apparatus 1. This process is performed concurrently with the process shown in Fig.9. In Fig.10, when a factor event occurs in step S41, the control part 11 notifies the factor detection part 13 of the factor in step S42, and releases a current factor in step S43. The control part 11 determines whether a remaining factor exists in step S44. If a remaining factor exists, the control part 11 repeats notification of a factor and release of the current factor, and at a time when no factor remains, the process ends.

On the other hand, upon time-out of the factor collecting timer (started in the process of Fig.9) in step S45, the control part 11 reads the factor information table 131 or the determination process data table 141 in step S46, and determines whether there is a factor that satisfies a condition in step S47. If there is a factor that satisfies the condition, the control part 11 notifies the factor detection part 13 or the process determination part 15 of the factor in step S48. Then, regardless whether there is a factor that matches the condition, the control part 11 sets a next timer value of the factor collecting timer in step S49, and releases the current factor in step S43. Then, the control part 11 determines whether a remaining factor exists in step S44. If a remaining factor exists, the control part 11 repeats notification of a factor and release of the current factor, and at a time when no factor remains, the process ends.

In the following, a more concrete embodiment of the present invention is described.

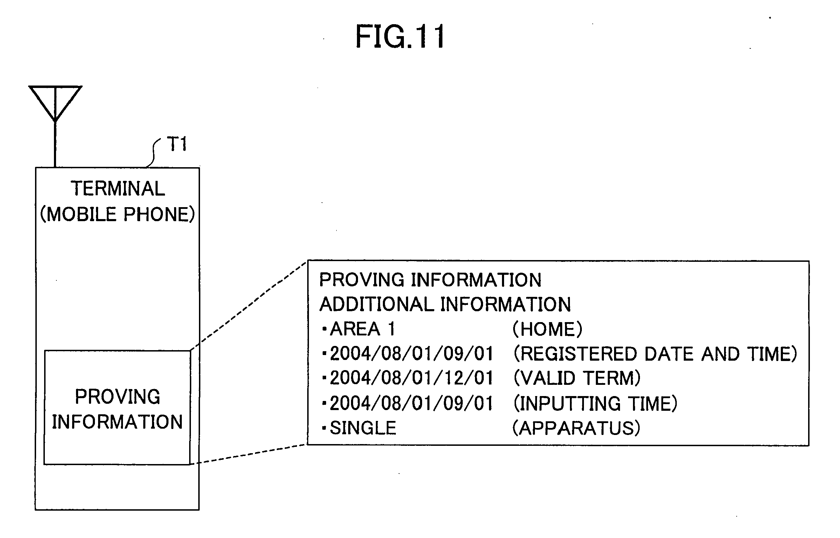

Fig.11 shows a concrete example in a case where the proving process apparatus 1 and the proof using apparatus 2 are integrated, which corresponds to Fig.2. In Fig.11, the proving process apparatus 1 and the proof using apparatus 2 are configured as a terminal T1 such as a mobile phone which holds proving information in the inside. A user of the terminal T1 sets beforehand a determination condition of a factor based on an action that is difficult for anyone except for a valid user to attain for proving that the user is a valid user, so that proving information can be provided in the inside and the user can use a communication function, and viewing/setting functions of internal information that are substantial functions of the terminal T1 when the condition is satisfied. Or, when a predetermined condition is satisfied, use of the functions of the terminal T1 can be prohibited.

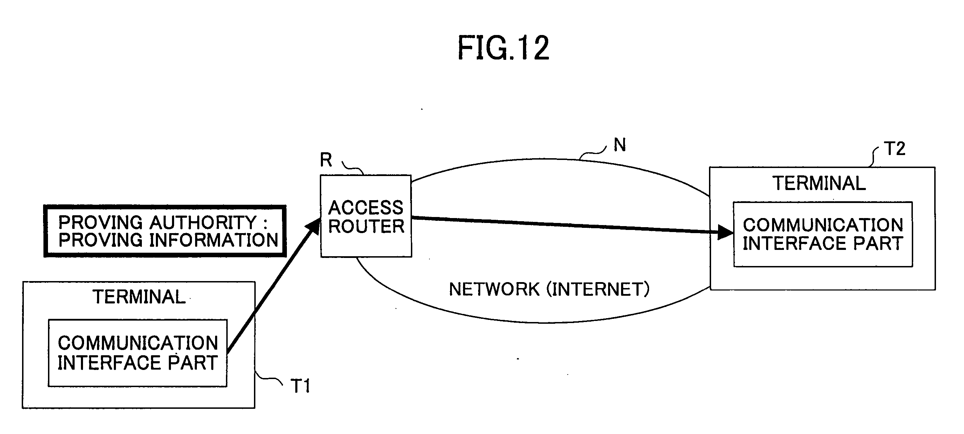

Fig.12 shows a concrete example in a case where the proving process apparatus 1 and the proof using apparatus 2 are separated, which corresponds to Fig.3. In Fig.12, the proving process apparatus 1 is configured as a personal computer, a PDA (Personal Digital Assistant), or a terminal T1 such as a mobile phone. Also, the proof using apparatus 2 is configured as a personal computer, a PDA, or a terminal T2 such as a mobile phone. A user of the terminal T1 sets beforehand a determination condition of a factor based on an action that is difficult for anyone except for a valid user to attain for proving that the user is a valid user. Accordingly, if the condition is satisfied, the proving information is provided to a terminal T2 via an access router R and a network N, so that the user can use an essential function of the terminal T2 under control of the user himself. Or, if the predetermined condition is satisfied, the essential function of the terminal T2 can be prohibited.

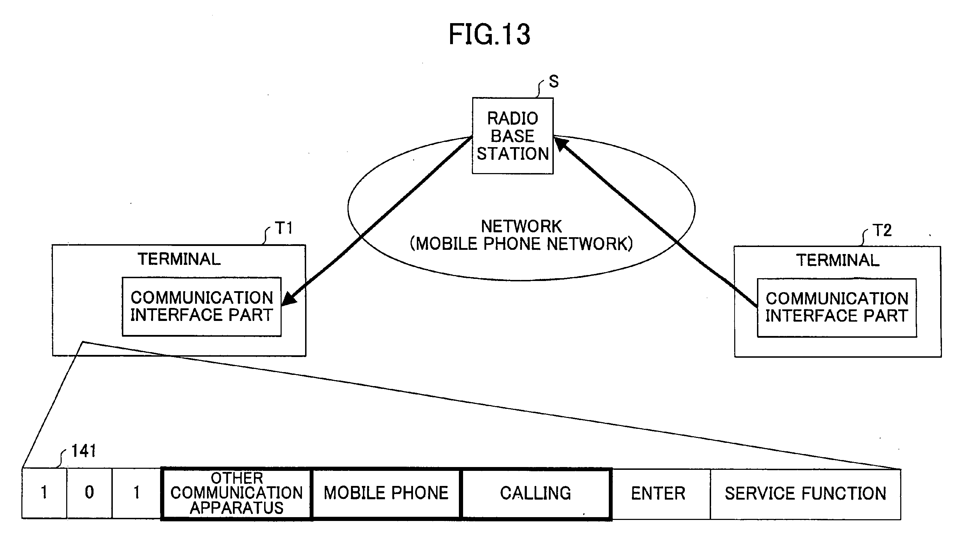

Figs.13-16 show a concrete example of a determination condition in a case where the proving process apparatus 1 and the proof using apparatus 2 are integrated.

Fig.13 shows an example in which the determination process data table 141 of the terminal T1 as the proving process apparatus 1 and the proof using apparatus 2 has a setting in which a service function becomes valid if a mobile phone is called from another communication device that corresponds to the terminal T2. In this case, the terminal T1 can be used on condition that a particular terminal T2 calls the mobile phone via a wireless base station S and the like in a network N. Since the condition is known only to the user of the terminal T1, this method can effectively prevent invalid use of the terminal T1.

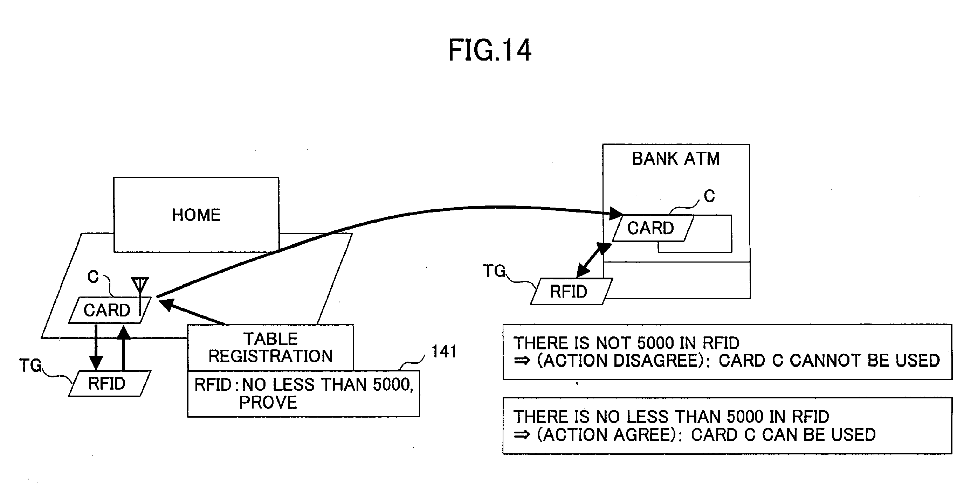

Fig.14 shows an example in which the determination process data table 141 of a card C as the proving process apparatus 1 and the proof using apparatus 2 has a setting in which the card is proved to be effective if the remaining amount of a radio tag TG such as an electronic money card is no less than 5000 yen, wherein the setting is performed in a home. In this case, when a user uses the card C in a bank ATM (Automatic Teller Machine), the user can use the card C on condition that the radio tag TG is within an accessible short distance and that the remaining amount of the radio tag is no less than 5000 yen. Since the condition can be known only by the valid user of the card C, this method can effectively prevent invalid use of the card C.

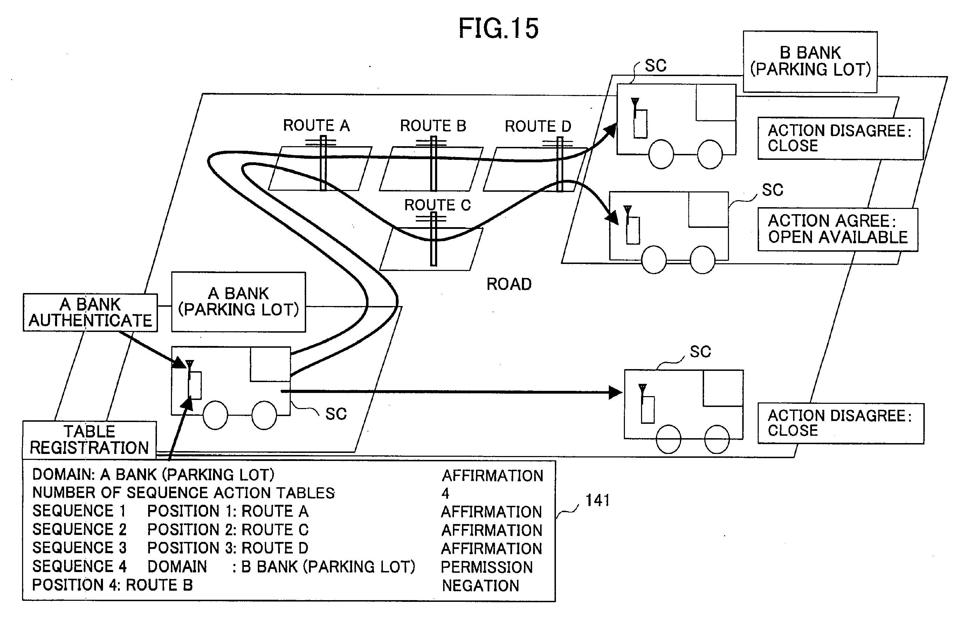

Fig.15 shows an example in which a condition for allowing a storage door of a transport vehicle SC to open and a condition for not allowing the storage door to open are set in the determination process data table 141 of the transport vehicle SC as the proving process apparatus 1 and the proof using apparatus 2. The condition for allowing the storage door to open is that, if the vehicle exists in an area of an A bank first, the vehicle moves to an area of a B bank along a route A -> C-> D. The condition for not allowing the storage door to open is that the vehicle moves along a route B. In this case, the storage door of the transport vehicle SC is allowed to open in the area of the A bank, so that loading and unloading of cash and the like can be performed. If the transport vehicle SC reaches the area of the B bank along an unusual route A->B->D, a part of the action condition is not satisfied, and the storage door is not allowed to open. Also, when the transport vehicle SC reaches an area different from the area of the B bank along a totally different route, the action condition is not satisfied, so that the storage door is not allowed to open. If the transport vehicle SC reaches the area of the B bank along a normal route A->C->D, the action condition is satisfied so that the storage door is allowed to open and the loading and unloading of cash and the like can be performed. Accordingly, transported objects such as cash can be effectively protected from theft of the transport vehicle SC, and illegal acts of a person (for example, a guard) in charge of the transport.

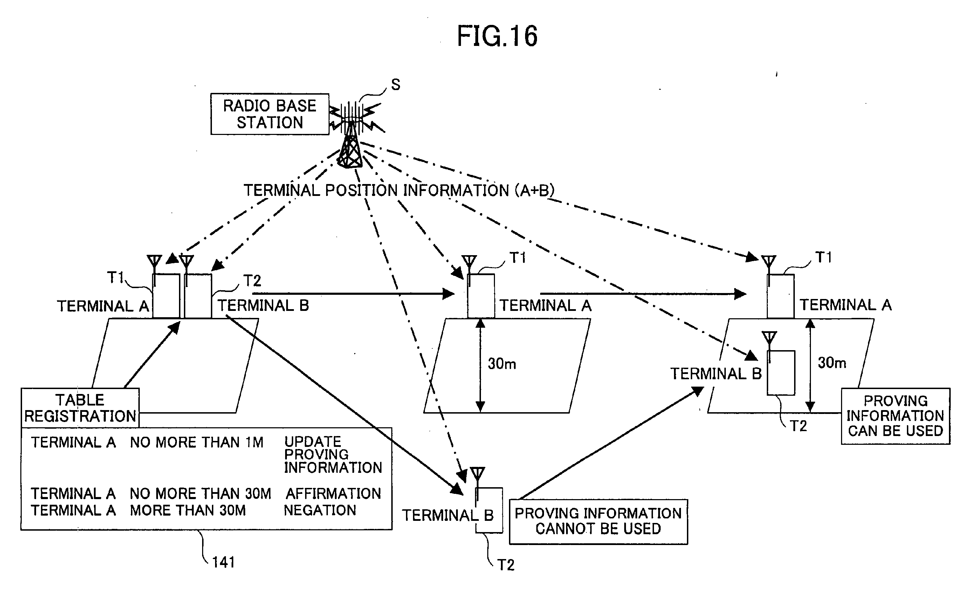

Fig.16 shows an example for setting the determination process data table 141 of the terminal T2 (terminal B) as the proving process apparatus 1 and the proof using apparatus 2 in which proving information is updated when a distance to a terminal T1 (terminal A) is no more than 1 m, and the proving information is made effective when the distance to the terminal 1 is no more than 30 m so that the use of the function is allowed, and the use of the function is prohibited when the distance to the terminal T1 exceeds 30 m. In this case, position of the terminals T1 and T2 are provided as factor information sent from a wireless base station S. When the terminal T2 exists within 1 m from the terminal T1, the proving information is updated to newest information. When the distance between the terminals T1 and T2 exceeds 30 m, a predetermined function becomes unavailable. When the distance becomes no more 30 m again, the predetermined function becomes again available. By making the same setting to the terminal T1, the predetermined function cannot be used for each of the terminals T1 and T2 unless the distance between terminals T1 and T2 is shorter than a predetermined value.

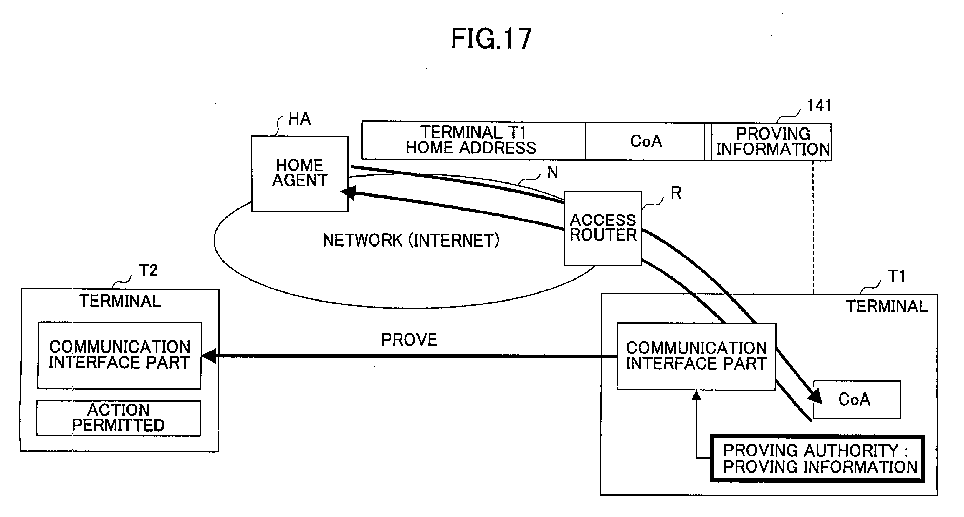

Figs. 17 - 19 shows a concrete example of determination conditions in a case when the proving process apparatus 1 and the proof using apparatus 2 are separated.

Fig.17 shows an example in which a setting is made being associated with a home address of the terminal T1 in the determination process data table 141 of the terminal T1 as the proving process apparatus 1. In the setting, the terminal T1 provides proving information as a proving authority when a mobile IP is a predetermined CoA (care of address). In this case, when the terminal T1 receives a care of address from an access router R in a mobile environment, the care of address is associated with the home address for the home agent HA. At the same time, when the care of address is a predetermined address that is set in the determination process table 141, the terminal T1 provides the terminal T2 as the proof using apparatus with proving information, and allows the terminal T2 to operate.

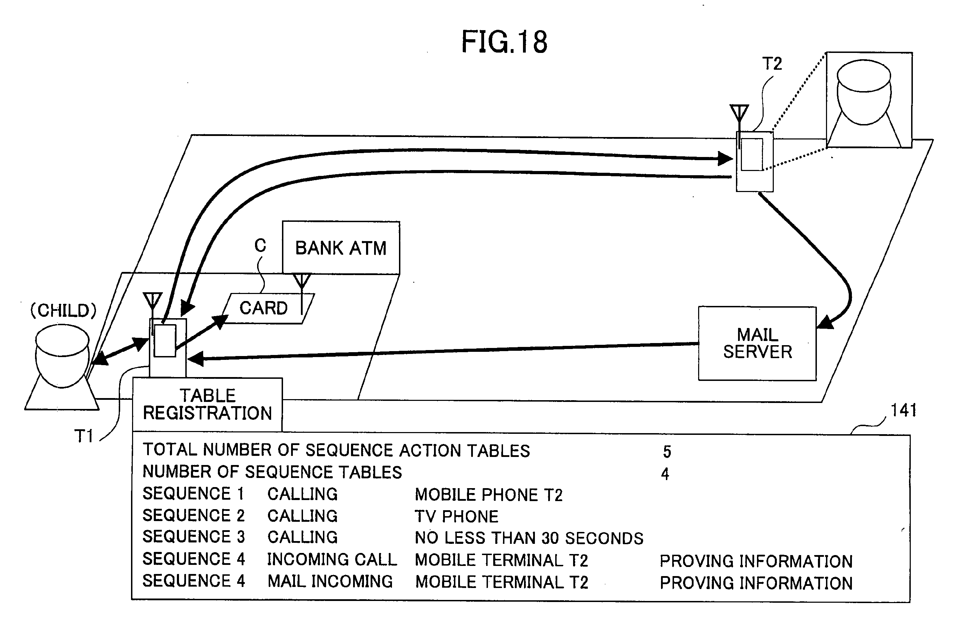

Fig.18 shows an example in which a setting is made in the determination process data table 141 of the terminal T1 as the proving process apparatus 1. In the setting, proving information is provided to the card C if a mobile telephone call is performed between the terminals T1 and T2, and, next, a call on a TV phone is performed, and further, the call continues no less than 30 seconds. Then, after that, there is an incoming call of a mobile telephone from the terminal T2 or there is an incoming call of a mail. In this case, assuming that a user of the terminal T1 is a child and that a user of the terminal T2 is a parent, the card C is provided with proving information so that it can be used in a bank ATM if the child speaks with the parent via a regular phone, then, the child speaks with the parent via a TV phone for enough time for checking faces of each other, and further, the child receives an incoming phone call or an incoming mail from the parent.

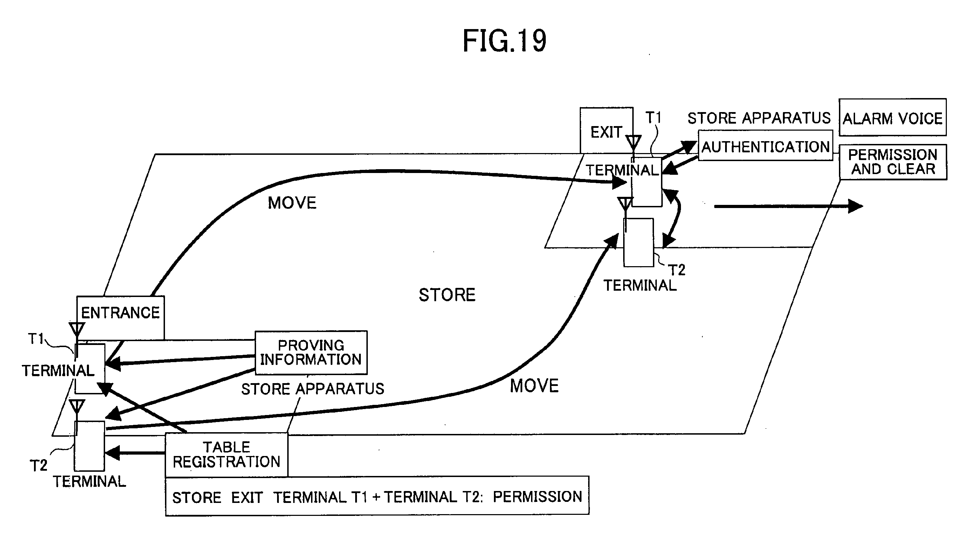

Fig.19 shows an example in which each determination process data table 141 of terminals T1 and T2 as the proving process apparatus 1 stores information indicating that exiting is permitted only when the terminals T1 and T2 exist within a close distance at an exit of a store. Setting of the condition in the determination process data table 141 is performed by a store apparatus at an entrance of the store, and also proving information is set. In this case, when the terminals T1 and T2 exist within a close distance, proving information is provided to the store apparatus as the proof using apparatus 2, and a security function is released so that exiting is permitted. However, when the terminals T1 and T2 do not exist within the close distance, if one of the users of the terminals T1 and T2 tries to exit, since proving information is not provided to the store apparatus, exiting is prevented due to an alarm voice and the like. This example can be used for a purpose for preventing a child accompanying a customer from being kidnapped.

The present invention is not limited to the specifically disclosed embodiments, and variations and modifications may be made without departing from the scope of the invention.

## Claims

1. A process synchronous proving system
**characterized by**:
a holding part configured to hold a determination condition for a factor based on an action which factor is difficult to attain by anyone except for a valid user;
a detection part configured to detect the factor;
a determination part configured to determine whether the determination condition is satisfied by the factor that is detected; and
a providing part configured to provide proving information according to a result of the determination by the determination part.

2. The process synchronous proving system as claimed in claim 1, the process synchronous proving system comprising:
a proving process apparatus that includes the holding part, the determination part and the providing part;
a determination condition setting apparatus that sets the determination condition to the proving process apparatus;
a proving information providing apparatus that provides the proving process apparatus with the proving information;
a factor providing apparatus that provides the proving process apparatus with the factor; and
a proof using apparatus that receives the proving information from the proving process apparatus.

3. The process synchronous proving system as claimed in claim 2, wherein the proving process apparatus and the proof using apparatus are configured as a single apparatus.

4. The process synchronous proving system as claimed in claim 2, wherein the proof using apparatus is connected to the proving process apparatus via communication means.

5. The process synchronous proving system as claimed in claim 1, wherein the determination condition is managed by a determination process data table in which an event that identifies the factor is associated with a function that is provided when the factor is satisfied.

6. The process synchronous proving system as claimed in claim 5, the determination process data table comprising:
a field indicating a table order;
a field indicating a single mode for performing determination by using one line, a sequential mode for performing determination by using a plurality of lines sequentially, or a simultaneous mode for performing determination by using a plurality of lines at the same time;
a field indicating an order of a line;
a field indicating the event that identifies the factor;
a field indicating a logical calculation with another line and indicating a last line of a condition; and
a field indicating a providing function provided when the condition is satisfied.

7. The process synchronous proving system as claimed in claim 1, wherein the detection part detects the factor by using a factor information table that includes an area definition defining a place where the factor occurs and a plurality of definitions of factors.

8. The process synchronous proving system as claimed in claim 1, wherein the proving information is fixedly set or is dynamically set according to the result of the determination.

9. The process synchronous proving system as claimed in claim 1, wherein the detection part detects the factor in response to occurrence of a factor event, or the detection part detects the factor by determining whether the factor is satisfied at a predetermined timing.

10. The process synchronous proving system as claimed in claim 3, wherein the determination condition is that a terminal that is the single apparatus is called by a predetermined other terminal, and wherein functions of the terminal are permitted to be used when the determination condition is satisfied.

11. The process synchronous proving system as claimed in claim 3, wherein the determination condition is that a radio tag existing near a card that is the single apparatus stores predetermined data, and wherein functions of the card are permitted to be used when the determination condition is satisfied.

12. The process synchronous proving system as claimed in claim 3, wherein the determination condition is that a vehicle that is the single apparatus reaches a predetermined destination via one or more predetermined points, and wherein a storage door of the vehicle is permitted to open when the determination condition is satisfied.

13. The process synchronous proving system as claimed in claim 3, wherein the determination condition is that a terminal that is the single apparatus exists within a predetermined distance from a predetermined other terminal, and wherein functions of the terminal are permitted to be used when the determination condition is satisfied.

14. The process synchronous proving system as claimed in claim 4, wherein the determination condition is that a terminal corresponding to the proving process apparatus has a predetermined care of address in a mobile environment, and wherein the terminal sends proving information to a predetermined other terminal corresponding to the proof using apparatus so that the terminal permits the predetermined other terminal to use its functions when the determination condition is satisfied.

15. The process synchronous proving system as claimed in claim 4, wherein the determination condition is that a terminal corresponding to the proving process apparatus communicates with a predetermined other terminal for making a call and that the terminal receives an incoming call or mail from the predetermined other terminal, and wherein functions of a card accessible by the terminal are permitted to be used when the determination condition is satisfied.

16. The process synchronous proving system as claimed in claim 4, wherein the determination condition is that a terminal corresponding to the proving process apparatus exists within a predetermined distance from a predetermined other terminal, and wherein the terminal sends proving information to a facility apparatus so that exiting from the facility is permitted when the determination condition is satisfied.

17. A process synchronous proving method **characterized by** :
a setting step of setting a determination condition for a factor based on an action which factor is difficult to attain by anyone except for a valid user;
a detection step of detecting the factor;
a determination step of determining whether the determination condition is satisfied by the factor that is detected; and
a providing step of providing proving information according to a result of the determination in the determination step.
